# EUROPÄISCHE PATENTSCHRIFT

(11) **EP 1 737 181 B1**
(45) Veröffentlichungstag und Bekanntmachung des Hinweises auf die Patenterteilung: **22.08.2012**
(21) Anmeldenummer: 05405398.8
(22) Anmeldetag: 23.06.2005
(51) Int. Cl.: H04L 29/06, H04M 1/725

(54) **Vorrichtung, Verfahren und Computerprogrammprodukt zum Steuern der Nutzbarkeit eines Applikationsmoduls mittels Sicherheitsmodul**
Apparatus, method and computer program product for controlling the usability of an application module by means of security module
Appareil, méthode et produit logiciel pour contrôler l'utilité d'un module d'application par un module de sécurité

(43) Veröffentlichungstag der Anmeldung: 27.12.2006
(73) Patentinhaber: Swisscom AG, 3050 Bern (CH)
(72) Erfinder: Cantini, Renato, 1782 Belfaux (CH); Aebi, Paul, 3303 Münchringen (CH)
(74) Vertreter: Rentsch Partner AG

(56) Entgegenhaltungen:
- EP-A- 1 271 881
- US-A1- 2004 123 152
- US-B1- 6 226 749
- US-B1- 6 550 010
- WAP FORUM: "WAP-182-ProvArch-20010314-a" WAP STANDARD SPECIFICATION, 14. März 2001 (2001-03-14), Seiten 1-22, XP002253357

## Beschreibung

### Technisches Gebiet

Die vorliegende Erfindung betrifft ein Sicherheitsmodul und ein Verfahren zum Steuern der Nutzbarkeit eines Applikationsmoduls. Die vorliegende Erfindung betrifft insbesondere ein für ein Kommunikationsendgerät geeignetes Sicherheitsmodul, das eingerichtet ist, ein Telekommunikationsnetz zu authentifizieren, und das mindestens ein nutzbares Applikationsmodul umfasst, sowie ein Verfahren zum Steuern der Nutzbarkeit des Applikationsmoduls.

### Stand der Technik

Sicherheitsmodule sind insbesondere für mobile Kommunikationsendgeräte, beispielsweise Mobilfunktelefone, in der Form von Chipkarten als so genannte SIM-Karten (Subscriber Identity Module) bekannt. Solche Sicherheitsmodule finden vermehrt auch Verwendung in Kommunikationsendgeräten für Festnetze. Neben der Teilnehmeridentifizierung dienen die Sicherheitsmodule insbesondere auch der Authentifizierung der Telekommunikationsnetze. Protokolle für eine End-zu-End-Netzwerkauthentifizierung durch das Sicherheitsmodul werden in verschiedenen Normierungsschriften beschrieben. Die Authentifizierung des Netzwerkzugriffs auf Mobilnetze basierend auf 3GPP AKA (3GPP: Third Generation Partnership Project; AKA: Authentication and Key Agreement Protocol) ist beispielsweise in den technischen Spezifikationen ETSI TS 133 102 V6.3.0 (2004-12); Universal Mobile Telecommunications System (UMTS); 3G Security; Security Architecture (3GPP TS 33.102 Version 6.3.0 Release 6) oder ETSI TS 131 102 V6.9.0 (2005-03) Universal Mobile Telecommunications System (UMTS); Characteristics of the USIM Application (3GPP TS 31.102 Version 6.9.0 Release 6) definiert. Die Authentifizierung des Zugriffs auf IMS (IP Multimedia Subsystem) basierend auf 3GPP AKA wird beispielsweise in den technischen Spezifikationen ETSI TS 131 103 V6.7.0 (2005-03); Digital Cellular Telecommunications System (Phase 2+); Universal Mobile Telecommunications System (UMTS); Characteristics of the IP Multimedia Services Identity Module (ISIM) Application (3GPP TS 31.103 Version 6.7.0 Release 6) definiert. Die Authentifizierung des Zugriffs auf öffentliche drahtlose Lokalnetze (Public Wireless Local Area Network, WLAN) basierend auf EAP (Extensible Authentication Protocol) wird beispielsweise in ETSI TS 102 310 V6.1.0 (2005-02); Smart Cards; Extensible Authentication Protocol Support in the UICC (Release 6) beschrieben. Weitere Authentifizierungsmechanismen werden in ETSI TS 101 181 V8.8.0 (2001-12); Digital Cellular Telecommunications System (Phase 2+); Security Mechanisms for SIM Application Toolkit; Stage 2 (3GPP TS 03.48 Version 8.8.0 Release 1999) und ETSI TS 123 048 V5.8.0 (2003-12); Digital Cellular Telecommunications system (Phase 2+); Universal Mobile Telecommunications System (UMTS); Security Mechanisms for the (U)SIM Application Toolkit; Stage 2 (3GPP TS 23.048 Version 5.8.0 Release 5) für SMS (Short Messaging Services) beschrieben. Typischerweise umfassen die Sicherheitsmodule auch Applikationsmodule, die insbesondere oft auch netzunabhängig nutzbar sind. Zum Beispiel kann ein Kryptographiemodul zur Entschlüsselung verschlüsselter Daten genutzt werden, ohne dass dazu der Zugriff auf ein authentifiziertes Telekommunikationsnetz notwendig ist. In ähnlicher Weise kann ein Applikationsmodul zur Online-Bezahlung über das Internet genutzt werden, ohne dass dazu notwendigerweise das Mobilfunknetz oder das WLAN benutzt werden muss, die vom Herausgeber des Sicherheitsmoduls betrieben werden. Das Sicherheitsmodul bietet einem Betreiber eines Telekommunikationsnetzes, insbesondere ein Mobilfunknetz oder WLAN, der einem Teilnehmer ein Sicherheitsmodul mit Applikationsmodulen zur Nutzung im Telekommunikationsnetz zur Verfügung stellt, somit keine Kontrolle darüber, ob der Teilnehmer netzunabhängige Applikationsmodule benutzt, ohne auch das Telekommunikationsnetz des Betreibers zu benutzen. Das heisst, das Sicherheitsmodul bittet keine Anbindung der Nutzung von netzunabhängigen Applikationen an die Nutzung des Telekommunikationsnetzes des Betreibers.

In Wireless Application Protocol (WAP) Forum: "Wireless Application Protocol, WAP-182-ProvArch-20010314-a, Provisioning Architecture Overview" vom 14. März 2001 werden Sicherheitsbetrachtungen für die Konfiguration von WAP Clients, typischerweise drahtlose Kundenendgeräte, erläutert. Die gesicherte Konfiguration eines WAP Clients erfolgt basierend auf einem Vertrauensvehältnis zwischen einem vertrautem Anbieterserver (Trusted Provisioning Server, TPS) des Konfigurationskontexts und dem WAP Client. Bei der Erstellung des Konfigurationskontexts können beispielsweise auch Sicherhietsparameter wie geteilte Geheimnisse oder Zertifikate verwendet werden.

In US 2004/0123152 wird eine Plattform für hardwarebasierte Sicherheitstoken wie SIM-Karten oder USB-Tokens (Universal Serial Bus) beschrieben. Die Sicherheitstokens umfassen eine oder mehrere Sicherheitsdomänen für die Installation und Ausführung von Applikationen. Die Sicherheitsdomänen sind jeweils einem Applikationsanbieter zugeordnet und umfassen interne Sicherheitsmechanismen. Die Sicherheitsmechanismen basieren auf gespeicherten Sicherheitsregeln, die insbesondere auch Regeln zum Sperren und Freigeben von Berechtigungsnachweisen (Credentials) und kryptografischen Schlüsseln umfassen.

### Darstellung der Erfindung

Es ist eine Aufgabe der vorliegenden Erfindung ein für ein Kommunikationsendgerät geeignetes Sicherheitsmodul sowie ein Verfahren zum Steuern der Nutzbarkeit eines Applikationsmoduls des Sicherheitsmoduls vorzuschlagen, welche nicht die Nachteile des Stands der Technik aufweisen. Es ist insbesondere eine Aufgabe der vorliegenden Erfindung ein Sicherheitsmodul sowie ein Verfahren zum Steuern der Nutzbarkeit eines Applikationsmoduls des Sicherheitsmoduls vorzuschlagen, welche mindestens eine gewisse Anbindung der Nutzung von netzunabhängigen Applikationsmodulen an die Nutzung eines bestimmten Telekommunikationsnetzes ermöglichen.

An dieser Stelle soll festgehalten werden, das mit dem Begriff Nutzbarkeit die Eigenschaft eines Applikationsmoduls gemeint ist (für einen Benutzer) zur Benutzung verfügbar zu sein. In entsprechender Weise ist ein Applikationsmodul mit aufgehobener Nutzbarkeit (für den Benutzer) nicht zur Benutzung verfügbar, weil das Applikationsmodul für den Benutzer beispielsweise nicht sichtbar, selektierbar, aktivierbar oder ausführbar ist.

Gemäss der vorliegenden Erfindung werden die oben angeführten Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Das Sicherheitsmodul ist für ein Kommunikationsendgerät vorgesehen und umfasst mindestens ein nutzbares Applikationsmodul. Zudem ist das Sicherheitsmodul eingerichtet, ein Telekommunikationsnetz zu authentifizieren.

Die oben genannten Ziele werden durch die vorliegende Erfindung insbesondere dadurch erreicht, dass das Sicherheitsmodul mit einem Sperrmodul versehen wird zum Aufheben der Nutzbarkeit des Applikationsmoduls. Überdies umfasst das Sicherheitsmodul ein Freigabemodul zum Wiederherstellen (respektive Herstellen) der Nutzbarkeit des Applikationsmoduls, sowie ein Steuermodul zum Aktivieren des Freigabemoduls (respektive zum Aktivieren des Wiederherstellens der Nutzbarkeit) abhängig von empfangenen Daten, die authentifizierbar einem bestimmten Telekommunikationsnetz zuweisbar sind. Das Sicherheitsmodul umfasst beispielsweise mehrere Steuermodule, die jeweils einem Applikationsmodul zugeordnet sind. Das Sicherheitsmodul ist vorzugsweise als Vorrichtung ausgeführt, insbesondere als Chipkarte, welche entfernbar mit dem Kommunikationsendgerät verbindbar ist. Der Fachmann wird verstehen, dass das Sicherheitsmodul in einer Variante auch ausführbar ist als Computerprogrammprodukt mit Computerprogrammcodemitteln zur Steuerung eines oder mehrerer Prozessoren des Kommunikationsendgeräts. In einer Ausführungsvariante ist das Sicherheitsmodul als Teilnehmeridentifizierungsmodul ausgeführt. Das Sicherheitsmodul ist beispielsweise für ein mobiles, für Mobilfunknetze eingerichtetes Kommunikationsendgerät ausgeführt. Dadurch dass die Nutzbarkeit eines Applikationsmoduls abhängig von Daten, die authentifizierbar einem bestimmten Telekommunikationsnetz zuweisbar sind, freigegeben oder aufgehoben wird, ist es möglich die Nutzung von netzunabhängigen Applikationen an die Nutzung eines bestimmten Telekommunikationsnetzes anzubinden. Beispielsweise kann die Nutzbarkeit eines Applikationsmoduls an die Bedingung geknüpft werden, dass der Benutzer des Kommunikationsendgeräts sich in das bestimmte Telekommunikationsnetz einbucht und dabei Authentifizierungsdaten dieses Telekommunikationsnetzes empfängt. Die Bedingung für die Nutzbarkeit wird vorzugsweise auch auf Telekommunikationsnetze ausgedehnt, die mit dem bestimmten Telekommunikationsnetz ein Roaming-Abkommen haben, d.h. die Nutzbarkeit wird folglich an die Verwendung in Telekommunikationsnetzen des Heimnetzbetreibers und der Roamingpartner des Heimnetzbetreibers gebunden. Durch die explizite Übermittlung von authentifizierbaren Berechtigungsmeldungen respektive Berechtigungsdaten kann die Nutzbarkeit eines Applikationsmoduls an bestimmte Bedingungen des Betreibers des Telekommunikationsnetzes geknüpft werden, beispielsweise an einen bestimmten Betrag von Dienstleistungen, die durch den Benutzer vom Betreiber des Telekommunikationsnetzes bezogen werden.

In verschiedenen oder kombinierten Ausführungsvarianten ist das Steuermodul zudem eingerichtet, das Sperrmodul zu aktivieren, abhängig von der Anzahl Benutzungen des Applikationsmoduls, der Anzahl Selektionen des Applikationsmoduls, der Anzahl Benutzungen von Funktionen des Applikationsmoduls, der Anzahl erstellter Sessionen über einen logischen Kanal des Applikationsmoduls, der Anzahl Rückstellungszyklen des Sicherheitsmoduls und/oder dem Erreichen einer Zeitdauer. Durch die Überwachung unterschiedlicher Parameter ist es möglich die Nutzbarkeit eines Applikationsmoduls dynamisch zu steuern und flexibel an unterschiedliche Anforderungen anzupassen.

In verschiedenen oder kombinierten Ausführungsvarianten ist das Steuermodul zudem eingerichtet, das Freigabemodul zu aktivieren, abhängig von empfangenen Berechtigungsmeldungen, die authentifizierbar und dem bestimmten Telekommunikationsnetz zuweisbar sind, und/oder abhängig von empfangenen Authentifizierungsdaten, die dem bestimmten Telekommunikationsnetz zuweisbar sind. Die Steuerung der Nutzbarkeit eines Applikationsmoduls abhängig von empfangenen Authentifizierungsdaten hat den Vorteil, dass die Nutzbarkeit ohne weitere Änderungen der Netzinfrastruktur alleine in im Sicherheitsmodul kontrolliert werden kann.

In verschiedenen oder kombinierten Ausführungsvarianten ist das Sperrmodul eingerichtet, die Nutzbarkeit des Applikationsmoduls aufzuheben durch Deaktivieren, Blockieren, Verstecken, Hibernieren und/oder Deinstallieren des Applikationsmoduls. Das Freigabemodul ist entsprechend eingerichtet, die Nutzbarkeit des Applikationsmoduls wiederherzustellen durch Aktivieren, Entblockieren, Auflisten, Aufwecken und/oder Installieren des Applikationsmoduls.

In einer Ausführungsvariante umfasst das Sicherheitsmodul mindestens ein Verfallregister, das einem oder mehreren Applikationsmodulen zugeordnet ist. Das Steuermodul ist eingerichtet, im Verfallregister aktuelle Angaben zu speichern über die Anzahl Benutzungen des Applikationsmoduls, die Anzahl Selektionen des Applikationsmoduls, die Anzahl Benutzungen von Funktionen des Applikationsmoduls, die Anzahl erstellter Sessionen über einen logischen Kanal des Applikationsmoduls, die Anzahl Rückstellungszyklen des Sicherheitsmoduls und/oder die Zeitdauer.

In einer Ausführungsvariante umfasst das Sicherheitsmodul mindestens ein Berechtigungsregister, das einem oder mehreren Applikationsmodulen zugeordnet ist. Das Steuermodul ist eingerichtet, im Berechtigungsregister Angaben zu speichern über die berechtigte Anzahl Benutzungen des Applikationsmoduls, die berechtigte Anzahl Selektionen des Applikationsmoduls, die berechtigte Anzahl Benutzungen von Funktionen des Applikationsmoduls, die berechtigte Anzahl Sessionen über einen logischen Kanal des Applikationsmoduls, die berechtigte Anzahl Rückstellungszyklen des Sicherheitsmoduls und/oder die berechtigte Zeitdauer.

Neben dem Sicherheitsmodul für Kommunikationsendgeräte und dem Verfahren zum Steuern der Nutzbarkeit eines Applikationsmoduls betrifft die vorliegende Erfindung auch ein Computerprogrammprodukt mit Computerprogrammcodemittel zur Steuerung eines oder mehrerer Prozessoren eines Sicherheitsmoduls für ein Kommunikationsendgerät, welches Sicherheitsmodul eingerichtet ist, ein Telekommunikationsnetz zu authentifizieren, und welches Sicherheitsmodul mindestens ein nutzbares Applikationsmodul umfasst, wobei das Computerprogrammprodukt insbesondere ein computerlesbares Medium umfasst, in welchem die Computerprogrammcodemittel gespeichert sind.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt ein Blockdiagramm, welches schematisch ein Kommunikationsendgerät mit einem Sicherheitsmodul darstellt, wobei das Sicherheitsmodul als Vorrichtung ausgeführt ist, die entfernbar mit dem Kommunikationsendgerät verbunden ist.
Figur 2 zeigt ein Blockdiagramm, welches schematisch ein weiteres Beispiel eines Kommunikationsendgeräts mit einem Sicherheitsmodul darstellt, wobei das Sicherheitsmodul als Computerprogrammprodukt mit Computerprogrammcodemitteln zur Steuerung von einem oder mehreren Prozessoren des Kommunikationsendgeräts ausgeführt ist.
Figur 3 zeigt ein Blockgramm, das schematisch eine mögliche Ausführung des Sicherheitsmoduls sowie diesbezügliche Prozessabläufe illustriert.
Figur 4 zeigt ein Blockgramm, das schematisch eine weitere mögliche Ausführung des Sicherheitsmoduls sowie diesbezügliche Prozessabläufe illustriert.
Figur 5 zeigt ein Blockgramm, das schematisch noch eine weitere mögliche Ausführung des Sicherheitsmoduls sowie diesbezügliche Prozessabläufe illustriert.
Figur 6 zeigt ein Blockgramm, das schematisch eine weitere mögliche Ausführung des Sicherheitsmoduls sowie diesbezügliche Prozessabläufe illustriert.

### Wege zur Ausführung der Erfindung

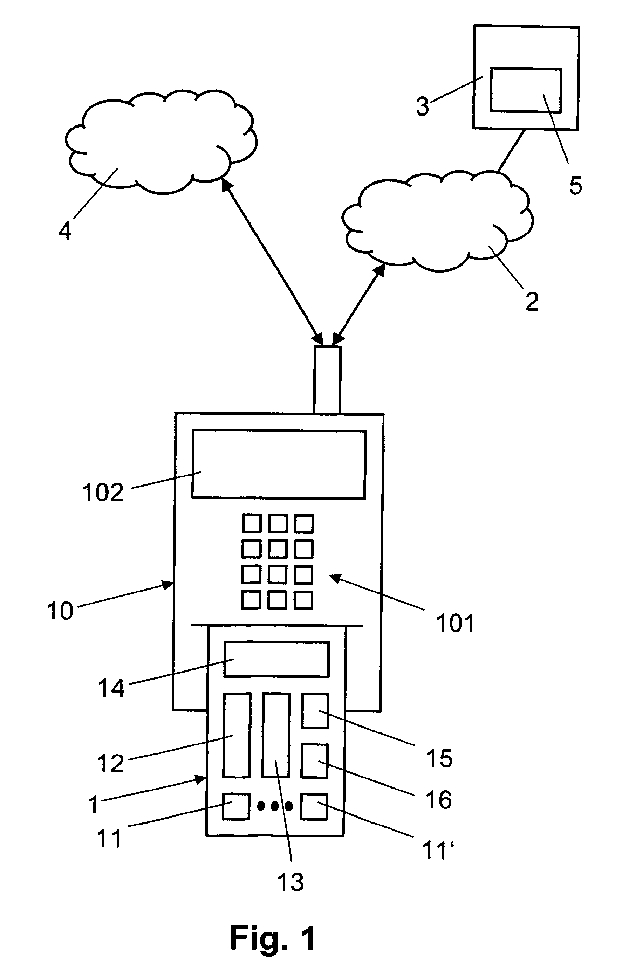

In den Figuren 1 bis 6 werden einander entsprechende Komponenten jeweils mit dem selben Bezugszeichen bezeichnet.

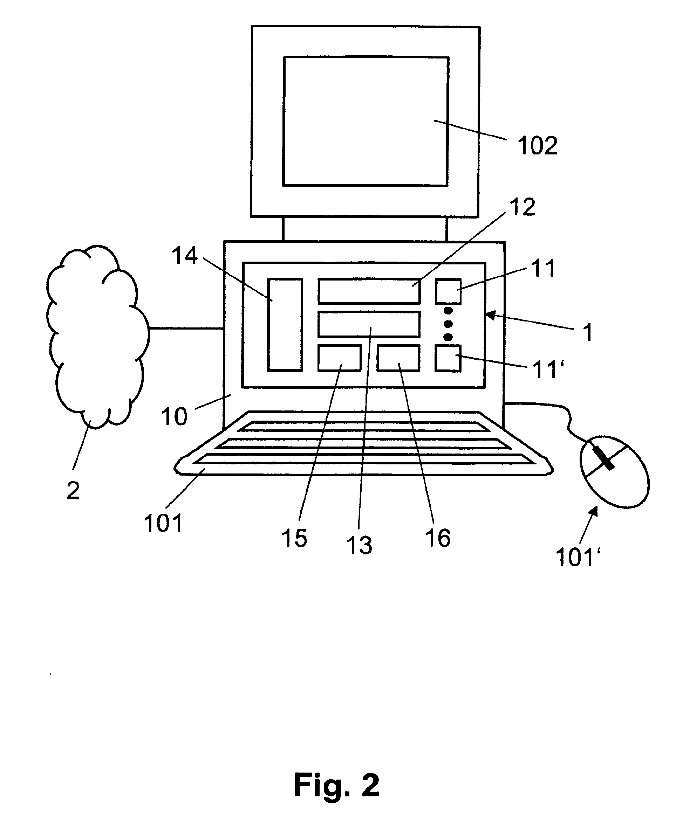

In den Figuren 1 bis 6 bezeichnet das Bezugszeichen 1 ein Sicherheitsmodul, das eingerichtet ist, ein Telekommunikationsnetz 2 zu authentifizieren. Eine End-zu-End-Authentifikation des Telekommunikationsnetzes 2 wird durch das Sicherheitsmodul 1 beispielsweise basierend auf den eingangs angeführten bekannten Authentifikationsmechanismen durchgeführt. Das Sicherheitsmodul 1 umfasst mehrere Applikationsmodule 11, 11', welche vom Benutzer des Sicherheitsmoduls 1, oder durch die Laufzeitumgebung (Client Execution Environment) oder Applikationen des Kommunikationsendgeräts 10 nutzbar sind. Für Applikationsmodule 11, 11', die Benutzerinteraktion benötigen, können Daten vom Benutzer beispielsweise über die Dateneingabelemente 101, 101' (Tastatur, Maus) eingegeben und dem Benutzer über die Anzeige 102 oder akustisch wiedergegeben werden. Neben den nutzbaren Applikationsmodulen 11, 11' umfasst das Sicherheitsmodul 1 weitere Funktionsmodule, insbesondere ein Sperrmodul 12, ein Freigabemodul 13 und ein Steuermodul 14, sowie ein Verfallregister 15 und ein Berechtigungsregister 16. Das Sperrmodul 12 ist eingerichtet, die Nutzbarkeit eines oder mehrerer Applikationsmodule 11, 11' aufzuheben, das heisst die Verfügbarkeit und/oder Berechtigung zur Benutzung der betreffenden Applikationsmodule 11, 11' zu sperren. Das Freigabemodul 13 ist eingerichtet, die Nutzbarkeit eines oder mehrerer Applikationsmodule 11, 11' wiederherzustellen, das heisst die Verfügbarkeit und/oder Berechtigung zur Benutzung der betreffenden Applikationsmodule 11, 11' (erneut oder gegebenenfalls erstmalig) herzustellen und zu gewähren. Das Steuermodul 14 ist eingerichtet, das Freigabemodul 13, respektive das Wiederherstellen der Nutzbarkeit, sowie das Sperrmodul 12, respektive das Aufheben der Nutzbarkeit, abhängig von der Benutzung eines oder mehrerer Applikationsmodule 11, 11', das heisst abhängig von definierten Bedingungen an die Benutzung der Applikationsmodule 11, 11', zu aktivieren. Die Funktionsmodule sind vorzugsweise als programmierte Softwaremodule ausgeführt. Die Funktionsmodule umfassen Computerprogrammcode zur Steuerung von einem oder mehreren Prozessoren, welche sich auf der Vorrichtung befinden, auf der das Sicherheitsmodul 1 ausgeführt ist. Wie in der Figur 1 schematisch dargestellt ist, ist das Sicherheitsmodul 1 vorzugsweise als Vorrichtung ausgeführt, welche entfernbar mit dem Kommunikationsendgerät 10 verbunden ist, vorzugsweise als Chipkarte, insbesondere als Teilnehmeridentifizierungsmodul in der Form einer SIM-Karte. Wie in der Figur 2 schematisch dargestellt ist, ist das Sicherheitsmodul 1 in einer Variante als Computerprogrammprodukt ausgeführt, das direkt im Kommunikationsendgerät 10 implementiert ist und einen oder mehrere Prozessoren des Kommunikationsendgeräts 10 steuert. Der Fachmann wird verstehen, dass die Funktionsmodule auch teilweise oder vollständig hardwaremässig ausgeführt werden können. Das Kommunikationsendgerät 10 umfasst mindestens ein Kommunikationsmodul für die Datenkommunikation über Telekommunikationsnetze 2, 4. Das Kommunikationsendgerät 10 ist beispielsweise als Mobilfunktelefon, PDA (Personal Data Assistant), Laptop oder Personal Computer ausgeführt. Das Telekommunikationsnetz 2 umfasst vorzugsweise ein Mobilfunknetz, beispielsweise ein GSM-Netz (Global System for Mobile Communication), ein UMTS-Netz (Universal Mobile Telephone System), ein anderes, beispielsweise satellitenbasiertes Mobilfunksystem, und/oder ein (öffentliches) WLAN. Der Fachmann wird verstehen, dass das Telekommunikationsnetz 2 auch ein Festnetz umfassen kann, beispielsweise ein ISDN (Integrated Services Digital Network) oder das Internet. Das Telekommunikationsnetz 4 entspricht technologisch beispielsweise dem Telekommunikationsnetz 2, weist jedoch eine andere Netzidentifizierung (z.B. einen anderen Mobile Network Code, MNC) auf und wird typischerweise von einem anderen Betreiber betrieben. In der Figur 1 bezieht sich das Bezugszeichen 3 auf eine Authentifizierungszentrale, welche netzseitig die End-zu-End-Netzauthentifizierung durch das Sicherheitsmodul 1 unterstützt. Das Bezugszeichen 5 bezieht sich auf ein Berechtigungskontrollmodul, das nicht in der Authentifizierungszentrale 3 implementiert zu sein braucht, sondern in einer anderen Netzwerkeinheit des Telekommunikationsnetzes 2 angeordnet sein kann, beispielsweise in einem Berechtigungskontrollserver. Das Berechtigungskontrollmodul 5 ist vorzugsweise als Computerprogrammprodukt ausgeführt, das Computerprogrammcode umfasst zur Steuerung eines oder mehrerer Prozessoren einer Netzwerkeinheit des Telekommunikationsnetzes 2. Auf die Funktion des Berechtigungskontrollmoduls 5 wird später eingegangen.

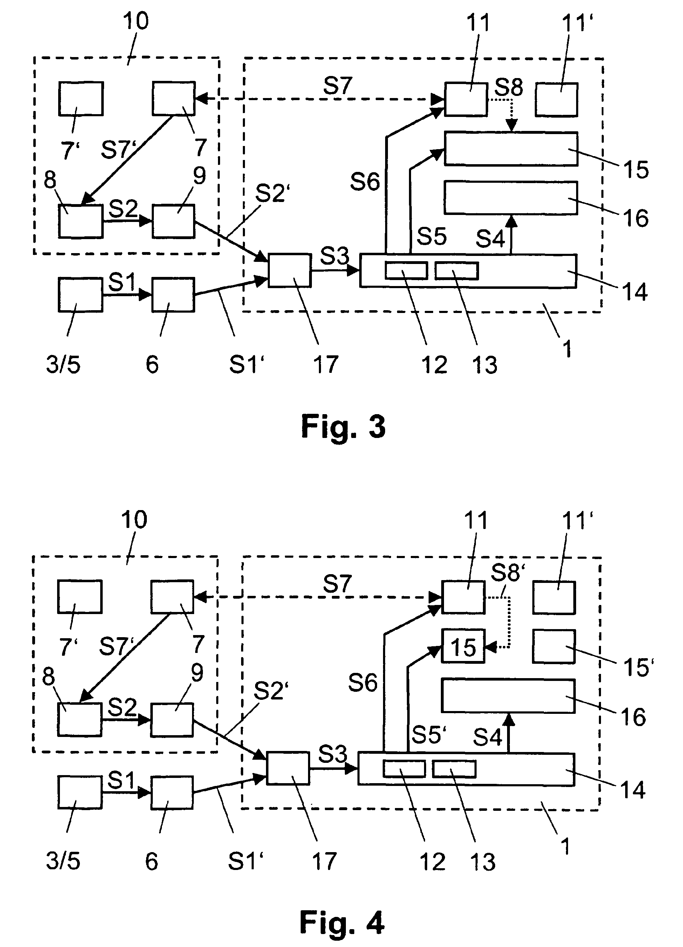

In den nachfolgenden Abschnitten wird mit Bezug auf die Figuren 3 bis 6 die Funktionsweise des Sicherheitsmoduls 1 erläutert. In den Figuren 3 bis 6 beziehen sich die Bezugszeichen 7, 7' auf Applikationsmodule (Client Applications) des Kommunikationsendgeräts 10; das Bezugszeichen 8 bezieht sich auf die Laufzeitumgebung (Client Execution Environment) des Kommunikationsendgeräts 10; das Bezugszeichen 9 bezieht sich auf ein Ereignissteuermodul (Client Event Handler) des Kommunikationsendgeräts 10; das Bezugszeichen 6 bezieht sich auf einen Netzwerk-Gateway; und das Bezugszeichen 17 bezieht sich auf die Laufzeitumgebung (Execution Environment) des Sicherheitsmoduls 1. Die Figuren 3 bis 6 geben eine logische/funktionale Darstellung wieder. Der Datenfluss und Kontrollfluss auf der Applikationsebene zwischen einem aktiven Applikationsmodul 11 des Sicherheitsmoduls 1 und einem zugeordneten Applikationsmodul 7 des Kommunikationsendgeräts 10 werden in den Figuren 3 bis 6 durch den Schritt S7 angedeutet. Mit dem Schritt S7' wird schematisch angedeutet, dass Ereignisse, wie die Selektion einer Applikation (z.B. Applikationsmodul 11 des Sicherheitsmoduls 1), durch Applikationsmodule 7 des Kommunikationsendgeräts 10 ausgelöst werden.

Wie in den Figuren 3 bis 6 dargestellt ist, werden in der Laufzeitumgebung 17 des Sicherheitsmoduls 1 im Schritt S1' Daten von der Authentifizierungszentrale 3 oder vom Berechtigungskontrollmodul 5 entgegengenommen, die beispielsweise im Schritt S1 über den Netzwerk-Gateway 6 geleitet werden. Die Daten von der Authentifizierungszentrale 3 umfassen Authentifizierungsdaten, die bei der Authentifizierung des Telekommunikationsnetzes 2 an das Sicherheitsmodul 1 übermittelt werden und eine Authentifizierung des Telekommunikationsnetzes 2 anzeigen. Die Daten vom Berechtigungskontrollmodul 5 umfassen mindestens eine Berechtigungsmeldung, die vom Berechtigungskontrollmodul 5 an das Sicherheitsmodul 1 übermittelt wird. Die Berechtigungsmedlung ist authentifizierbar und kann dem Telekommunikationsnetz 2, respektive dem Berechtigungskontrollmodul 5, einem zugeordneten Berechtigungskontrollserver oder einem vertrauten Dienstleister zugewiesen werden. Die Berechtigungsmeldung umfasst beispielsweise Berechtigungsdaten mit Instruktionen zur Freigabe oder Wiederherstellung der Berechtigung zur Nutzung eines oder mehrerer Applikationsmodule 11, 11'. Die Berechtigungsdaten können im Sicherheitsmodul 1 auch implizit auf Grund einer empfangenen Berechtigungsmeldung erzeugt werden. In der Laufzeitumgebung 17 des Sicherheitsmoduls 1 können von einem vertrauten Zeitserver auch authentifizierbare Zeitstempel über das Telekommunikationsnetz 2, 4 empfangen werden. Zudem werden in der Laufzeitumgebung 17 des Sicherheitsmoduls 1 im Schritt S2' Daten von der Laufzeitumgebung 8 des Kommunikationsendgeräts 10 entgegengenommen, die beispielsweise im Schritt S2 über das Ereignissteuermodul 9 des Kommunikationsendgeräts 10 geleitet werden. Die Daten von der Laufzeitumgebung 8 umfassen Instruktionen zur Selektion und Aktivierung von Applikationsmodulen 11, 11', zur Selektion und Aktivierung von Funktionen der Applikationsmodule 11, 11', sowie zur Rückstellung (Reset) des Sicherheitsmoduls 1.

Wie in den Figuren 3 bis 5 dargestellt ist, werden die empfangenen Daten von der Laufzeitumgebung 17 des Sicherheitsmoduls 1 im Schritt S3 an das Steuermodul 14 weitergeleitet.

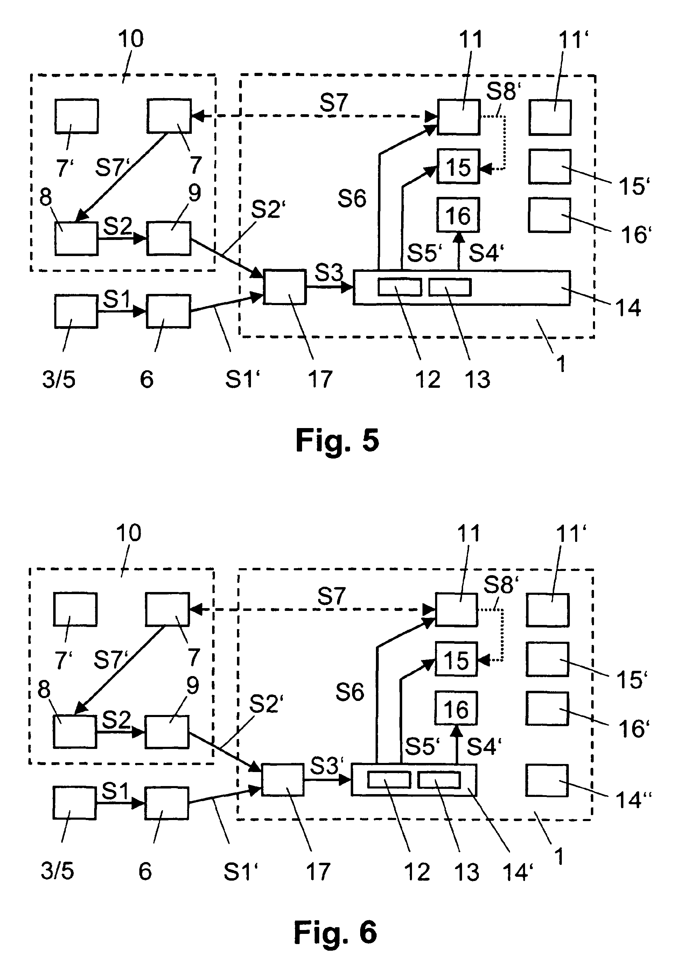

Wie in der Figur 6 dargestellt ist, weist das Sicherheitsmodul 1 in einer Ausführungsvariante mehrere Steuermodule 14', 14" auf, die jeweils einem der Applikationsmodule 11, 11' zugeordnet sind. In der Ausführungsvariante nach Figur 6, werden Daten von der Laufzeitumgebung 8, die die Steuerung eines der Applikationsmodule 11, 11' betreffen, im Schritt S3' jeweils an das betreffende zugeordnete Steuermodul 14', 14" weitergeleitet. Zudem werden in der Ausführungsvariante nach Figur 6, Berechtigungsmeldungen für eines oder mehrere bestimmte Applikationsmodule, im Schritt S3' jeweils an das betreffende zugeordnete Steuermodul 14', 14" weitergeleitet.

Wie in den Figuren 3 und 4 dargestellt ist, aktualisiert das Steuermodul 14 im Schritt S4 das Berechtigungsregister 16 auf Grund von empfangenen Berechtigungsmeldungen oder Authentifizierungsdaten, die eine Authentifizierung des Telekommunikationsnetzes 2 anzeigen. Auf Grund der empfangenen Berechtigungsmeldungen oder Authentifizierungsdaten aktiviert, das Steuermodul 14 das Freigabemodul 13, welches im Schritt S6 die Nutzbarkeit eines, mehrerer oder sämtlicher Applikationsmodule 11, 11' freigibt respektive wiederherstellt. Die Freigabe respektive Wiederherstellung der Nutzbarkeit eines Applikationsmoduls 11, 11' wird durch das Freigabemodul 13 dadurch erreicht, dass das betreffende Applikationsmodul 11, 11' aktiviert, entblockiert, aufgeweckt, installiert oder in einer Liste angezeigt wird. Es kann auch ein Sperrtoken gelöscht werden, welcher durch das Applikationsmodul 11, 11' gelesen wird. Das Berechtigungsregister 16 umfasst Berechtigungsbedingungen für eines oder mehrere bestimmte Applikationsmodule 11, 11' oder für sämtliche Applikationsmodule 11, 11' des Sicherheitsmoduls 1. Die Berechtigungsbedingungen umfassen beispielsweise für eines oder mehrere Applikationsmodule 11, 11' die berechtigte Anzahl Benutzungen des Applikationsmoduls 11, 11', die berechtigte Anzahl Selektionen des Applikationsmoduls 11, 11', die berechtigte Anzahl Benutzungen von Funktionen des Applikationsmoduls 11, 11', die berechtigte Anzahl Sessionen über einen logischen Kanal des Applikationsmoduls 11, 11', die berechtigte Anzahl Rückstellungszyklen des Sicherheitsmoduls 1 und/oder die berechtigte Zeitdauer zur Benutzung des Applikationsmoduls 11, 11'. Die Berechtigungsbedingungen werden im Berechtigungsregister 16 beispielsweise auf Grund der empfangenen Wiederherstellungsinstruktionen oder Authentifizierungsdaten gesetzt, wobei die Berechtigungsbedingungen in den Wiederherstellungsinstruktionen enthalten sind oder versteckt im Sicherheitsmodul 1 gespeichert sind.

Die Freigabe oder Wiederherstellung der Nutzbarkeit eines Applikationsmoduls auf Grund empfangener Authentifizierungsdaten ist in einer Variante an zusätzliche Bedingungen gebunden, die beispielsweise eine bestimmte Anzahl Authentifizierungen des Telekommunikationsnetzes 2 innerhalb einer definierten Zeitspanne vorschreiben.

Wie in den Figuren 5 und 6 dargestellt ist, weist das Sicherheitsmodul 1 in einer Ausführungsvariante mehrere Berechtigungsregister 16, 16' auf, die jeweils einem der Applikationsmodule 11, 11' zugeordnet sind. In der Ausführungsvariante nach den Figuren 5 und 6, aktualisiert das Steuermodul 14 (respektive 14', 14") im Schritt S4' jeweils das betreffende zugeordnete Berechtigungsregister 16, 16' auf Grund der empfangenen Berechtigungsmeldungen oder Authentifizierungsdaten.

Um ändernde Berechtigungen zu verfolgen und nachzuführen, verfügt das Sicherheitsmodul 1 über eines oder mehrere Verfallregister 15, 15'. Die Figur 3 illustriert eine Ausführungsvariante, in der das Sicherheitsmodul 1 ein Verfallregister 15 aufweist. Die Figuren 4 bis 6 illustrieren bevorzugte Ausführungsvarianten, in denen das Sicherheitsmodul 1 mehrere Verfallregister 15, 15' aufweist, die jeweils einem Applikationsmodul 11, 11' zugeordnet sind. Im Verfallregister 15, 15' werden Angaben gespeichert über durchgeführte oder noch durchzuführende Aktivitäten im Zusammenhang mit einem oder mehreren Applikationsmodulen 11, 11'. Wenn das Verfallregister 15, 15' als inkrementierendes Register eingerichtet ist, werden Zeitwerte oder Anzahl Aktivitäten (Benutzungen) ausgehend von Null hochgezählt. Wenn das Verfallregister 15, 15' als dekrementierendes Register eingerichtet ist, werden Zeitwerte oder Anzahl Aktivitäten (Benutzungen) ausgehend von einem anfänglichen Grenzwert (Berechtigungsbedingung) heruntergezählt. Das Verfallregister 15, 15' umfasst insbesondere Angaben über die Anzahl Benutzungen des Applikationsmoduls 11, 11', die Anzahl Selektionen des Applikationsmoduls 11, 11', die Anzahl Benutzungen von Funktionen des Applikationsmoduls 11, 11', die Anzahl erstellter Sessionen über einen logischen Kanal des Applikationsmoduls 11, 11', die Anzahl Rückstellungszyklen des Sicherheitsmoduls 1 und/oder eine Zeitdauer, beispielsweise die Zeitdauer seit der Gewährung der Berechtigung. Der Fachmann wird verstehen, dass das Verfallregister 15, 15' dem Berechtigungsregister 16, 16' entsprechen kann, wobei das Setzen des Berechtigungsregisters 16 dem Setzen eines Initialisierungswerts des Verfallregisters 15 gleichkommt, welcher im Laufe der Zeit oder abhängig von der Benutzung dekrementiert wird.

Wenn die empfangenen Daten eine Anforderung betreffend eines der Applikationsmodule 11, 11' oder eine Rückstellungsanforderung des Sicherheitsmoduls 1 umfassen, aktualisiert das Steuermodul 14, 14' im Schritt S5, S5' das betreffende Verfallregister 15, 15' und überprüft die Berechtigung zur Selektion oder Aktivierung des betreffenden Applikationsmoduls 11, 11' respektive einer Funktion des betreffenden Applikationsmoduls 11, 11'. Die Überprüfung der Berechtigung basiert auf dem betreffenden Berechtigungsregister 16, 16' und/oder dem betreffenden Verfallregister 15, 15'. Beim inkrementierenden Verfallregister 15, 15' liegt keine Berechtigung mehr vor, wenn der inkrementierte Wert den entsprechenden maximal zulässigen Wert (z. B. die Anzahl Benutzungen) im Berechtigungsregister 16, 16' erreicht oder übersteigt. Beim dekrementierenden Verfallregister 15, 15' liegt keine Berechtigung mehr vor, wenn der dekrementierte Wert ausgehend vom ursprünglichen maximal zulässigen Wert (z. B. die Anzahl Selektionen) aus dem Berechtigungsregister 16, 16' den Wert Null erreicht. Wenn keine Berechtigung vorliegt, wird beispielsweise eine Fehlerrückmeldung an die anfordernde Einheit erzeugt. Wenn die Berechtigung auf Grund der vorliegenden Anforderung verfällt, aktiviert das Steuermodul 14 das Sperrmodul 12, welches die Nutzbarkeit eines, mehrerer oder sämtlicher Applikationsmodule 11, 11' aufhebt. Die Aufhebung der Nutzbarkeit eines Applikationsmoduls 11, 11' wird durch das Sperrmodul 12 dadurch erreicht, dass das betreffende Applikationsmodul 11, 11' deaktiviert, blockiert, hiberniert, deinstalliert oder durch Entfernen aus einer Liste versteckt wird. Es kann auch ein Sperrtoken gesetzt werden, welcher beim Aktivieren durch das Applikationsmodul 11, 11' selber gelesen wird, worauf das Applikationsmodul 11, 11' seine Aktivität beendet. Andernfalls, wenn eine Berechtigung vorliegt, wird das betreffende Applikationsmodul 11, 11' respektive die betreffende Funktion selektiert und aktiviert. In einer alternativen Ausführungsvariante wird das Verfallregister 15, wie in der Figur 3 angedeutet, im Schritt S8 durch das betreffende Applikationsmodul 11 aktualisiert. In den Ausführungsvarianten mit mehreren Verfallregistern 15, 15' wird, wie in den Figuren 4 bis 6 angedeutet, im Schritt S8' das Verfallregister 15 aktualisiert, das dem betreffenden Applikationsmodul 11, 11' zugeordnet ist.

Im Sicherheitsmodul 1 können auch verschiedene Verfallregister 15, 15' und Berechtigungsregister 16, 16' für Applikationsmodule 11, 11' verschiedener Telekommunikationsnetze 2 respektive Betreiber vorgesehen werden.

## Patentansprüche

1. Ein als Vorrichtung ausgeführtes Sicherheitsmodul (1) für ein Kommunikationsendgerät (10), welches Sicherheitsmodul (1) eingerichtet ist, ein Telekommunikationsnetz (2) zu authentifizieren, und welches Sicherheitsmodul (1) mindestens ein nutzbares Applikationsmodul (11) umfasst, wobei das Applikationsmodul (11) Computerprogrammcode zur Steuerung eines Prozessors umfasst, **gekennzeichnet durch**
ein Sperrmodul (12) zum Aufheben der Nutzbarkeit des Applikationsmoduls (11),
ein Freigabemodul (13) zum Wiederherstellen der Nutzbarkeit des Applikationsmoduls (11), und
ein Steuermodul (14) zum Aktivieren des Freigabemoduls (13) zum Wiederherstellen der Nutzbarkeit des Applikationsmoduls (11) abhängig von einem aus: empfangener Berechtigungsmeldung, die authentifizierbar einem bestimmten Telekommunikationsnetz (2) zuweisbar ist, und empfangenen Authentifizierungsdaten, die dem Telekommunikationsnetz (2) zuweisbar sind.

2. Sicherheitsmodul (1) nach Anspruch 1, **dadurch gekennzeichnet, dass** das Steuermodul (14) zudem eingerichtet ist, das Sperrmodul (12) zu aktivieren abhängig von mindestens einem aus: Anzahl Benutzungen des Applikationsmoduls (11), Anzahl Selektionen des Applikationsmoduls (11), Anzahl Benutzungen von Funktionen des Applikationsmoduls (11), Anzahl Sessionen über einen logischen Kanal des Applikationsmoduls (11), Anzahl Rückstellungszyklen des Sicherheitsmoduls (1) und Erreichen einer Zeitdauer.

3. Slcherheltsmodul (1) nach einem der Ansprüche 1 oder 2, **dadurch gekennzeichnet, dass** das Sperrmodul (12) eingerichtet ist, die Nutzbarkeit des Applikationsmoduls (11) aufzuheben durch eines aus: Deaktivieren, Blockieren, Verstecken, Hibemieren und Deinstallieren des Applikationsmoduls (11), und dass das Freigabemodul (13) eingerichtet ist, die Nutzbarkeit des Applikationsmoduls (11) entsprechend wiederherzustellen durch eines aus: Aktivieren, Entblockieren, Auflisten, Aufwecken und Installieren des Applikationsmoduls (11).

4. Sicherheitsmodul (1) nach einem der Ansprüche 1 bis 3, **dadurch gekennzeichnet, dass** es mindestens ein Verfallregister (15) umfasst, das einem oder mehreren Applikationsmodulen (11) zugeordnet ist, und dass das Steuermodul (14) eingerichtet ist, im Verfallregister (15) aktuelle Angaben zu speichern über mindestens eines aus: Anzahl Benutzungen des Applikationsmoduls (11), Anzahl Selektionen des Applikationsmoduls (11), Anzahl Benutzungen von Funktionen des Applikationsmoduls (11), Anzahl Sessionen über einen logischen Kanal des Applikationsmoduls (11), Anzahl Rückstellungszyklen des Sicherheitsmoduls (1) und Zeitdauer.

5. Sicherheitsmodul (1) nach einem der Ansprüche 1 bis 4, **dadurch gekennzeichnet, dass** es mindestens ein Berechtigungsregister (16) umfasst, das einem oder mehreren Applikationsmoduls (11) zugeordnet ist, und dass das Steuermodul (14) eingerichtet ist, im Berechtigungsregister (16) Angaben zu speichern über mindestens eines aus: berechtigte Anzahl Benutzungen des Applikationsmoduls (11), berechtigte Anzahl Selektionen des Applikationsmoduls (11), berechtigte Anzahl Benutzungen von Funktionen des Applikationsmoduls (11), berechtigte Anzahl Sessionen über einen logischen Kanal des Appllkationsmoduls (11), berechtigte Anzahl Rückstellungszyklen des Sicherheitsmoduls (1) und berechtigte Zeitdauer.

6. Sicherheitsmodul (1) nach einem der Ansprüche 1 bis 5, **dadurch gekennzeichnet, dass** es als Vorrichtung insbesondere als Chipkarte ausgeführt ist, welche entfernbar mit dem Kommunikationsendgerät (10) verbindbar ist.

7. Sicherheitsmodul (1) nach einem der Ansprüche 1 bis 6, **dadurch gekennzeichnet, dass** es als Teilnehmeridentifizierungsmodul ausgeführt ist, und dass es für ein mobiles, für Mobilfunknetze eingerichtetes Kommunikationsendgerät (10) ausgeführt ist.

8. Computerprogrammprodukt umfassend: Computerprogrammcodemittel zur Steuerung eines oder mehrerer Prozessoren eines als Vorrichtung ausgeführten Sicherheitsmoduls (1) für ein Kommunikationsendgerät (10), welches Sicherheitsmodul (1) eingerichtet ist, ein Telekommunikationsnetz (2) zu authentifizieren, und welches Sicherheitsmodul (1) mindestens ein nutzbares Applikatlonsmodul (11) umfasst, wobei das Applikationsmodul (11) Computerprogrammcode zur Steuerung eines Prozessors umfasst, derart,
dass das Sicherheitsmodul (1) eine Aufhebung der Nutzbarkeit des Applikationsmoduls (11) ausführt,
dass das Sicherheitsmodul (1) eine Wiederherstellung der Nutzbarkeit des Applikationsmoduls (11) ausführt, und
dass das Sicherheitsmodul (1) die Wiederherstellung der Nutzbarkeit des Applikationsmoduls (11) aktiviert, abhängig von einem aus: empfangener Berechtigungsmeldung, die authentifizierbar einem bestimmten Telekommunikationsnetz (2) zuwelsbar ist, und empfangenen Authentifizierungsdaten, die dem Telekommunikationsnetz (2) zuweisbar sind.

9. Verfahren zum Steuern der Nutzbarkeit eines Applikationsmoduls (11), wobei das Applikationsmodul (11) Computerprogrammcode zur Steuerung eines Prozessors umfasst und in einem als Vorrichtung ausgeführten Sicherheitsmodul (1) für ein Kommunikationsendgerät (10) angeordnet ist, und wobei das Sicherheitsmodul (1) ein Sperrmodul (12), ein Freigabemodul (13) und ein Steuermodul (14) umfasst und eingerichtet ist, ein Telekommunikationsnetz (2) zu authentifizieren, **gekennzeichnet durch**
Aufheben der Nutzbarkeit des Applikationsmoduls (11) **durch** das Sperrmodul (12) des Sicherheitsmoduls (1),
Wiederherstellen der Nutzbarkeit des Applikationsmoduls (11) **durch** das Frelgabemodul (13) des Sicherheitsmoduls (1), und
Aktivieren des Wiederherstellens der Nutzbarkeit des Applikationsmoduls (11) **durch** das Steuermodul (14) des Sicherheitsmoduls (1) abhängig von einem aus: empfangener Berechtigungsmeldung, die authentifizierbar einem bestimmten Telekommunikationsnetz (2) zuweisbar ist, und empfangenen Authentifizierungsdaten, die dem Telekommunikationsnetz (2) zuweisbar sind.

10. Verfahren nach Anspruch 9, **dadurch gekennzeichnet, dass** das Aufheben der Nutzbarkeit des Applikationsmoduls (11) aktiviert wird abhängig von mindestens einem aus: Anzahl Benutzungen des Applikationsmoduls (11), Anzahl Selektionen des Applikationsmoduls (11), Anzahl Benutzungen von Funktionen des Applikationsmoduls (11), Anzahl Sessionen über einen logischen Kanal des Applikationsmoduls (11), Anzahl Rückstellungszyklen des Sicherheitsmoduls (1) und Erreichen einer Zeitdauer.

## Claims

1. Security module (1), constructed as a device, for a communication terminal (10), which security module (1) is configured for authenticating a telecommunication network (2) and which security module (1) comprises at least one usable application module (11), the application module (11) comprising computer program code for controlling a processor, **characterized by**
a blocking module (12) for cancelling the usability of the application module (11),
a release module (13) for restoring the usability of the application module (11), and
a control module (14) for activating the release module (13) for restoring the usability of the application module (11) in dependence on one of: received authorization message which can be assigned authenticatably to a certain telecommunication network (2), and received authentication data which can be assigned to the telecommunication network (2).

2. Security module (1) according to Claim 1, **characterized in that** the control module (14) is also configured for activating the blocking module (12) in dependence on at least one of: number of uses of the application module (11), number of selections of the application module (11), number of uses of functions of the application module (11), number of sessions over a logical channel of the application module (11), number of resetting cycles of the security module (1) and reaching a length of time.

3. Security module (1) according to one of Claims 1 and 2, **characterized in that** the blocking module (12) is configured for cancelling the usability of the application module (11) by means of one of: deactivating, blocking, hiding, hibernating and deinstalling the application module (11), and **in that** the release module (13) is configured to restore the usability of the application module (11) correspondingly by one of: activating, deblocking, listing, waking up and installing the application module (11 ).

4. Security module (1) according to one of Claims 1 to 3, **characterized in that** it comprises at least one expiry register (15) which is allocated to one or more application modules (11), and **in that** the control module (14) is configured for storing in the expiry register (15) current information on at least one of: number of uses of the application module (11), number of selections of the application module (11), number of uses of functions of the application module (11), number of sessions over a logical channel of the application module (11), number of resetting cycles of the security module (1) and length of time.

5. Security module (1) according to one of Claims 1 to 4, **characterized in that** it comprises at least one authorization register (16) which is allocated to one or more application modules (11) and **in that** the control module (14) is configured for storing in the authorization register (16) information on at least one of: authorized number of uses of the application module (11), authorized number of selections of the application module (11), authorized number of uses of functions of the application module (11), authorized number of sessions over a logical channel of the application module (11), authorized number of resetting cycles of the security module (1) and authorized length of time.

6. Security module (1) according to one of Claims 1 to 5, **characterized in that** it is constructed as a device, especially as a chip card which can be connected removably to the communication terminal (10).

7. Security module (1) according to one of Claims 1 to 6, **characterized in that** it is constructed as a subscriber identity module and **in that** it is constructed for a mobile communication terminal (10) configured for mobile radio networks.

8. Computer program product comprising: computer program code means for controlling one or more processors of a security module (1), constructed as a device, for a communication terminal (10), which security module (1) is configured for authenticating a telecommunication network (2) and which security module (1) comprises at least one usable application module (11), wherein the application module (11) comprises computer program code for controlling a processor, in such a manner
that the security module (1) performs a cancellation of the usability of the application module (11),
that the security module (1) performs a restoration of the usability of the application module (11), and
that the security module (1) activates the restoration of the usability of the application module (11) in dependence on one of: received authorization message, which can be assigned authenticatably to a certain telecommunication network (2), and received authentication data which can be assigned to the telecommunication network (2).

9. Method for controlling the usability of an application module (11), wherein the application module (11) comprises computer program code for controlling a processor and is arranged in a security module (1), constructed as a device, for a communication terminal (10), and wherein the security module (1) comprises a blocking module (12), a release module (13) and a control module (14) and is configured for authenticating a telecommunication network (2), **characterized by**
cancelling the usability of the application module (11) by the blocking module (12) of the security module (1),
restoring the usability of the application module (11) by the release module (13) of the security module (1), and
activating the restoration of the usability of the application module (11) by the control module (14) of the security module (1) in dependence on one of: received authorization message which can be assigned authenticatably to a certain telecommunication network (2), and received authentication data which can be assigned to the telecommunication network (2).

10. Method according to Claim 9, **characterized in that** the cancelling of the usability of the application module (11) is activated in dependence on at least one of: number of uses of the application module (11), number of selections of the application module (11), number of uses of functions of the application module (11), number of sessions over a logical channel of the application module (11), number of resetting cycles of the security module (1) and reaching a length of time.

## Revendications

1. Module de sécurité (1) réalisé sous la forme d'un dispositif pour un appareil d'émission de communication (10), ce module de sécurité (1) étant arrangé pour authentifier un réseau de télécommunication (2), et ce module de sécurité (1) comportant au moins un module d'application (11) utilisable, le module d'application (11) comportant des codes logiciels pour la commande d'un processeur, **caractérisé par**
un module de blocage (12) pour l'annulation de l'utilisation du module d'application (11),
un module de déblocage (13) pour le rétablissement de l'utilisation du module d'application (11), et
un module de commande (14) pour l'activation du module de déblocage (13) pour le rétablissement de l'utilisation du module d'application (11) en fonction d'un des faits suivants: la réception d'un message d'autorisation pouvant être attribué de manière authentifiable à un réseau de télécommunication défini (2), et la réception de données d'authentification pouvant être attribuées au réseau de télécommunication (2).

2. Module de sécurité (1) selon la revendication 1, **caractérisé en ce que** le module de commande (14) est de plus arrangé pour activer le module de blocage (12) en fonction d'au moins un des éléments suivants: nombre d'utilisations du module d'application (11), nombre de sélections du module d'application (11), nombre d'utilisations de fonctions du module d'application (11), nombre de sessions par l'intermédiaire d'un canal logique du module d'application (11), nombre de cycles de remises à l'état initial du module de sécurité (1) et atteinte d'une durée.

3. Module de sécurité (1) selon une des revendications 1 ou 2, **caractérisé en ce que** le module de blocage (12) est arrangé pour annuler l'utilisation du module d'application (11) au moyen d'un des éléments suivants : désactivation, blocage, dissimulation, hibernation et désinstallation du module d'application (11), et **en ce que** le module de déblocage (13) est arrangé pour rétablir en conséquence l'utilisation du module d'application (11) au moyen d'un des faits suivants: activation, déblocage, listage, réveil et installation du module d'application (11).

4. Module de sécurité (1) selon une des revendications 1 à 3, **caractérisé en ce qu'**il comporte au moins un registre d'échéance (15) attribué à un ou plusieurs modules d'application (11), et **en ce que** le module de commande (14) est arrangé pour mémoriser dans le registre d'échéance (15), des indications courantes concernant au moins un des éléments suivants : nombre d'utilisations du module d'application (11), nombre de sélections du module d'application (11), nombre d'utilisations de fonctions du module d'application (11), nombre de sessions par l'intermédiaire d'un canal logique du module d'application (11), nombre de cycles de remises à l'état initial du module de sécurité (1) et durée.

5. Module de sécurité (1) selon une des revendications 1 à 4, **caractérisé en ce qu'**il comporte au moins un registre d'autorisation (16) attribué à un ou plusieurs modules d'application (11), et **en ce que** le module de commande (14) est arrangé pour mémoriser dans le registre d'autorisation (16), des indications concernant au moins un des éléments suivants : nombre d'utilisations autorisées du module d'application (11), nombre de sélections autorisées du module d'application (11), nombre d'utilisations autorisées de fonctions du module d'application (11), nombre de sessions autorisées par l'intermédiaire d'un canal logique du module d'application (11), nombre de cycles autorisés de remises à l'état initial du module de sécurité (1) et durée autorisée.

6. Module de sécurité (1) selon une des revendications 1 à 5, **caractérisé en ce qu'**il est réalisé sous la forme d'un dispositif, notamment d'une carte à puce, pouvant être reliée de manière amovible à l'appareil d'émission de communication (10).

7. Module de sécurité (1) selon une des revendications 1 à 6, **caractérisé en ce qu'**il est réalisé sous la forme d'un module d'identification de l'utilisateur, et **en ce qu'**il est réalisé pour un appareil mobile d'émission de communication (10), arrangé pour des réseaux de téléphonie mobile.

8. Produit logiciel comportant : des moyens de code logiciel pour la commande d'un ou de plusieurs processeurs d'un module de sécurité (1) réalisé sous la forme d'un dispositif pour un appareil d'émission de communication (10), ce module de sécurité (1) étant arrangé pour authentifier un réseau de télécommunication (2), et ce module de sécurité (1) comportant au moins un module d'application (11) utilisable, le module d'application (11) comportant du code logiciel pour la commande d'un processeur, de telle sorte que
le module de sécurité (1) réalise une annulation de l'utilisation du module d'application (11),
le module de sécurité (1) réalise un rétablissement de l'utilisation du module d'application (11), et que
le module de sécurité (1) active le rétablissement de l'utilisation du module d'application (11) en fonction d'un des faits suivants : la réception d'un message d'autorisation pouvant être attribué de manière authentifiable à un réseau de télécommunication défini (2), et la réception de données d'authentification pouvant être attribuées au réseau de télécommunication (2).

9. Procédé pour la commande de l'utilisation d'un module d'application (11), dans lequel le module d'application (11) comporte du code logiciel pour la commande d'un processeur et est disposé dans un module de sécurité (1) réalisé sous la forme d'un dispositif pour un appareil d'émission de communication (10), et dans lequel le module de sécurité (1) comporte un module de blocage (12), un module de déblocage (13) et un module de commande (14) et est arrangé pour authentifier un réseau de télécommunication (2), **caractérisé par**
l'annulation de l'utilisation du module d'application (11) au moyen du module de blocage (12) du module de sécurité (1),
le rétablissement de l'utilisation du module d'application (11) au moyen du module de déblocage (13) du module de sécurité (1), et
l'activation du rétablissement de l'utilisation du module d'application (11) au moyen du module de commande (14) du module de sécurité (1) en fonction d'un des faits suivants : la réception d'un message d'autorisation pouvant être attribué de manière authentifiable à un réseau de télécommunication défini (2), et la réception de données d'authentification pouvant être attribuées au réseau de télécommunication (2).

10. Procédé selon la revendication 9, **caractérisé en ce que** l'annulation de l'utilisation du module d'application (11) est activée en fonction d'au moins un des éléments suivants : nombre d'utilisations du module d'application (11), nombre de sélections du module d'application (11), nombre d'utilisations de fonctions du module d'application (11), nombre de sessions par l'intermédiaire d'un canal logique du module d'application (11), nombre de cycles de remises à l'état initial du module de sécurité (1) et atteinte d'une durée.
